# EUROPEAN PATENT APPLICATION

(11) **EP 3 778 502 A1**
(43) Date of publication of application: **17.02.2021**
(21) Application number: 19787888.7
(22) Date of filing: 18.04.2019
(51) Int. Cl.: C02F 11/14

(54) **METHOD AND DEVICE FOR TREATING AQUEOUS SUBSTANCE**

(30) Priority: 19.04.2018 CN 201810352326
(71) Applicant: General Treatment Environment (Beijing) Co., Ltd., Beijing 100081 (CN)
(72) Inventor: ZHANG, Weihua, Shanghai 100081 (CN); XIA, Jiyang, Beijing 100081 (CN); LIU, Chunjie, Beijing 100081 (CN); HE, Lu, Beijing 100081 (CN); CHEN, Rui, Beijing 100081 (CN)
(74) Representative: Wang, Bo
(86) International application number: PCT/CN2019/083289
(87) International publication number: WO 2019/201313

(57) **Abstract**

A method for treating an aqueous substance, comprising: mixing an aqueous substance with a solvent at a first temperature to obtain a mixture containing a solid substance and a liquid substance; conducting a first separation treatment of the mixture to obtain the solid substance and the liquid substance; and conducting a second separation treatment of the liquid substance obtained by the first separation treatment at a second temperature to obtain an aqueous phase and an organic phase, the organic phase contains the solvent. The mutual solubility of the solvent and water used in the present invention at the first temperature is higher than that of the solvent and water at the second temperature, so that the separation and recovery of water is achieved by liquid-liquid separation without phase transition in the method for treating an aqueous substance provided by the present invention, so the energy consumption can be effectively reduced. The invention further relates to a corresponding device.

## Description

### Technical Field

The invention relates to the technical field of separation of mixtures, in particular to a method and device for treating an aqueous substance with a solvent to reduce the water content therein, so as to achieve the objective of reduction.

### Background

With the rapid development of our society and economy, the amount of municipal sewage and sludge has increased substantially. Municipal sludge, such as sewage sludge and municipal sewage treatment plant sludge, not only has high water content, but also contains a large amount of organic matter, heavy metals and certain toxic, harmful and refractory pollutants. Therefore, municipal sludge entering the environment without proper treatment will directly pollute the water body and atmosphere, and will also pose a threat to the ecological environment and human activities.

A large amount of sludge with various types and complex properties is also produced in various industrial production projects, such as the sludge produced in the process of crude oil extraction, storage, transportation, and processing in the petrochemical industry.

With the increasingly strict requirements of environmental protection, sludge reduction, harmlessness and resource treatment technology has become a hot research topic at present. Sludge reduction is the primary goal of sludge treatment. The existing sludge reduction technologies mainly include chemical conditioning, mechanical dehydration, drying, incineration, cracking, etc. The general treatment process is, firstly to preliminarily reduce depending on mechanical dehydration, then to fully reduce by drying (usually using thermal energy), and finally to completely reduce by incineration or cracking as needed. Traditional mechanical dehydration technology, mainly comprising frame pressure filter, belt pressure filter and centrifugal separation, has limited effect on sludge reduction in practice, and the water content of the sludge after treatment is generally as high as 85%. Drying is to remove water from the sludge by using evaporation of water, which has generally too large thermal energy consumption, too high operation cost, and difficulty to promote on a large scale, so that the sludge cannot be fully or completely reduced, and the goal of sludge treatment is difficult to achieve.

Therefore, there is a need for a method and device that can economically and effectively treat an aqueous substance and reduce the water content therein, thereby achieving reduction.

### Summary of the Invention

The present invention provides a method for treating an aqueous substance and a corresponding device.

At one aspect, the embodiment of the present invention relates to a method for treating an aqueous substance, comprising: mixing a first aqueous substance with a solvent at a first temperature to obtain a mixture containing a solid substance and a liquid substance, the liquid substance contains the solvent and water; conducting a first separation treatment of the mixture to obtain the solid substance and the liquid substance; and conducting a second separation treatment of the liquid substance obtained by the first separation treatment at a second temperature to obtain an aqueous phase and an organic phase, the organic phase contains the solvent, wherein, the mutual solubility of the solvent and water at the first temperature is higher than that of the solvent and water at the second temperature.

In the method for treating an aqueous substance of the present invention, the mutual solubility of the solvent used and water varies with temperature, specifically, the mutual solubility of the solvent and water at the first temperature is higher, the mutual solubility of the solvent and water at the second temperature is lower, the first temperature can be higher or lower than the second temperature.

Furthermore, the solvent used in the method for treating an aqueous substance of the present invention comprises one or more selected from the group consisting of alcohols, phenols, ethers, amines and ketones.

When the first temperature is higher than the second temperature, as an embodiment, the first temperature is in the range of from 50°C to 85°C, preferably, in the range of from 55°C to 80°C; the second temperature is in the range of from 0°C to 45°C, preferably, in the range of from 5°C to 40°C. In this case, the solvent used in the method for treating an aqueous substance of the present invention comprises one or more selected from the group consisting of methyl ethyl ketone, butanone, isopropanol, and isopropyl ether.

When the first temperature is lower than the second temperature, as an embodiment, the first temperature is in the range of from 0°C to 45°C, preferably, in the range of from 5°C to 40°C; the second temperature is in the range of from 50°C to 85°C, preferably, in the range of from 55°C to 80°C. In this case, the solvent used in the method for treating an aqueous substance of the present invention comprises diisopropylamine or triethylamine.

Furthermore, the solvent used in the method for treating an aqueous substance of the present invention is mixed with the first aqueous substance in a certain weight ratio. Generally, the weight ratio of the solvent to the first aqueous substance is less than 10:1, preferably, the weight ratio is less than 8:1.

Furthermore, the method for treating an aqueous substance of the present invention further comprises mixing at least a part of the organic phase obtained by the second separation treatment with a second aqueous substance for treating the second aqueous substance.

Furthermore, the method for treating an aqueous substance of the present invention further comprises one or more of the following steps: removing residual solvent in the solid substance obtained by the first separation unit; removing residual solvent in an aqueous phase obtained by the second separation unit; and separating an organic phase to obtain recovered solvent.

At another aspect, an embodiment of the present invention relates to a device for treating an aqueous substance, comprising:
a mixing unit, comprising an aqueous substance inlet, a solvent inlet and a mixture outlet; the mixing unit is used to mix an aqueous substance with a solvent at a first temperature to obtain a mixture containing a solid substance and a liquid substance, the liquid substance contains this solvent and water;
a first separation unit, comprising a mixture inlet, a solid substance outlet and a liquid substance outlet, wherein the mixture inlet is connected to the mixture outlet of the mixing unit, the first separation unit is used for a first separation treatment of the mixture to obtain a solid substance and a liquid substance; and
a second separation unit, comprising a liquid substance inlet, an aqueous phase outlet and an organic phase outlet, wherein the substance inlet is connected to the liquid substance outlet of the first separation unit, the second separation unit is used for a second separation treatment of the liquid substance obtained by the first separation treatment at a second temperature to obtain an aqueous phase and an organic phase, the organic phase contains the solvent.

Furthermore, in the device for treating an aqueous substance of the present invention, the mixing unit further comprises a first temperature control element for controlling the operating temperature of the mixing unit to be at the first temperature.

Furthermore, in the device for treating an aqueous substance of the present invention, the mixing unit further comprises a stirring element.

Furthermore, in the device for treating an aqueous substance of the present invention, the first separation unit further comprises one or more selected from the group consisting of a gravity settling element, a cyclone separation element, a membrane separation element, a pressure filter element, a pressure reduction filter element, a centrifugal separation element, a frame filter element, and a cartridge filter element.

Furthermore, in the device for treating an aqueous substance of the present invention, the second separation unit further comprises a second temperature control element for controlling the operating temperature of the second separation unit to be at the second temperature.

Furthermore, in the device for treating an aqueous substance of the present invention, the second separation unit further comprises a liquid-liquid separation element.

Furthermore, the device for treating an aqueous substance of the present invention further comprises a reflux unit, comprising a pipe connecting the organic phase outlet of the second separation unit and the solvent inlet of the mixing unit, used for refluxing at least a part of the organic phase separated by the second separation unit to the mixing unit.

Furthermore, the device for treating an aqueous substance of the present invention further comprises one or more of the following units:
a solid post-treatment unit, comprising a solid substance inlet and a solid substance with reduced solvent outlet, the solid substance inlet is connected to the solid substance outlet of first separation unit. The solid post-treatment unit is used to remove the residual solvent in the solid substance obtained by the first separation unit;
a water post-treatment unit, comprising an aqueous phase inlet and an aqueous phase with reduced solvent outlet, the aqueous phase inlet is connected to aqueous phase outlet of the second separation unit. The water post-treatment unit is used to remove the residual solvent in the aqueous phase obtained by the second separation unit; and
an organic phase post-treatment unit, comprising an organic phase inlet and a recovered solvent outlet, the organic phase inlet is connected to the organic phase outlet of second separation unit. The organic phase post-treatment unit is used to separate the organic phase to obtain the recovered solvent.

Furthermore, the aqueous substance treated in the method and device for treating an aqueous substance of the present invention, such as the first aqueous substance and the second aqueous substance, comprises a substance with water content more than 3% by weight. As an embodiment, the aqueous substance treated in the method and device of the present invention comprises one or more selected from the group consisting of municipal sludge, river bed sludge, industrial sludge, water treatment plant sludge, an animal and plant body, and a microorganism.

Furthermore, the water content in the solid substance separated by the method and device for treating an aqueous substance of the present invention is generally no more than 60% by weight, preferably no more than 40% by weight, more preferably no more than 30% by weight.

The device and method for treating an aqueous substance of the present invention can treat the aqueous substance economically and effectively, reduce the water content of the aqueous substance, and realize the reduction of the aqueous substance. The reduction percentage, one of the indicators to measure the reduction, refers to the weight percentage of the separated solid substance to the treated aqueous substance. The reduction percentage is related to two factors, one is the own solid content of the treated aqueous substance, and the other is the water content of the separated solid substance. The method and device for treating an aqueous substance of the present invention can increase the reduction percentage by reducing the water content in the separated solid substance.

In the method and device for treating an aqueous substance of the present invention, the mutual solubility of the solvent used and water varies with temperature. In the method and device for treating an aqueous substance of the present invention, at least a part of water in the aqueous substance can be separated without phase transition to obtain a solid substance with reduced water content, and therefore energy consumption is lower; since the separated organic phase can be recycled as a solvent again, the treatment cost is greatly reduced; in addition, the method and device for treating an aqueous substance of the present invention do not use an inorganic acid and alkali, and do not need to adjust the pH value of the system, which reduces the anti-corrosion requirements for equipment. Therefore, the present invention provides a method for treating an aqueous substance economically and effectively and a corresponding device.

### Brief Description of the Drawings

The drawings and the following detailed description are used to help understand the features and advantages of the present invention, wherein:
Fig. 1 is a schematic structural diagram of the device 100 for treating an aqueous substance according to an embodiment of the present invention;
Fig. 2 is a flowchart of treating an aqueous substance by applying the device 100 for treating an aqueous substance according to an embodiment of the present invention;
Fig. 3 is a flowchart of the method 200 for treating an aqueous substance according to an embodiment of the present invention.

### Detailed Description of Embodiments

Unless clearly defined otherwise in this application, the meanings of the used scientific and technical terms are commonly understood by those skilled in the technical field described in this application. The "include", "comprise", "have" or "contain" and similar words used in this application mean that in addition to the items listed thereafter and their equivalents, other items may also fall within the scope.

Approximate terms in this application are used to modify the quantity, which means that the present invention is not limited to the specific quantity, but also includes a modified part close to the stated quantity that is acceptable and does not cause changes in related basic functions. Correspondingly, modifying a value with "approximately", "about", "around", etc. means that the present invention is not limited to the precise value. In some embodiments, the approximate term may correspond to the precision of the instrument measuring the value. The numerical ranges in the present invention can be combined and/or interchanged, unless clearly stated otherwise, the numerical ranges include all numerical sub-ranges covered by them.

In the specification and claims, unless clearly indicated otherwise, the singular and plural of all items are not limited. The "first", "second" and similar words used in the specification and claims of this application do not indicate any order, quantity or importance, but are only used to distinguish different materials or embodiments.

Unless the context clearly clarifies otherwise, the terms "or" do not mean exclusive, but refer to the presence of at least one of the mentioned items (for example, ingredients), and include the case where a combination of the mentioned items may exist.

References in this specification to "some embodiments" and the like, indicate that a specific element (such as a feature, structure, and/or characteristic) related to the present invention is included in at least one embodiment described in this specification, possibly or impossiblely to appear in other embodiments. In addition, it should be understood that the described inventive elements can be combined in any suitable manner.

The "aqueous substance" or similar terms mentioned in this application refers to a substance containing components such as water and solid, which exist in solid, slurry, viscous liquid, suspended or liquid form, and the content of solid and water is generally in terms of weight percentage, for example, a substance with a water content more than 3%. In some embodiments, the aqueous substance comprises one or more selected from the group consisting of municipal sludge, river bed sludge, industrial sludge, water treatment plant sludge, an animal and plant body, and a microorganism. Wherein, municipal sludge comprises various sludges produced in urban life and biochemical sludge and other sludges produced in urban sewage treatment plants. River bed sludge generally refers to the silt in a river or lake. Industrial sludge comprises sludge produced in various industrial production processes, such as oily sludge produced in the production, storage, transportation, processing, and use of crude oil, and sludge produced in industrial water treatment. An animal and plant body can comprise meat, fur, nuts, spice-containing crops, Chinese medicine and so on. A microorganism such as algae. The "first aqueous substance" and "second aqueous substance" mentioned in this application refer to different aqueous substances, both of which may be different lots of the same aqueous substance with the same or similar component, or may be different types of aqueous substances, for example, independently selected from one or more of the categories listed above, respectively.

The mutual solubility of the solvent used in the embodiment of the present invention and water at the first temperature is higher than that of the solvent and water at the second temperature. As an embodiment, the solvent is mutually soluble or miscible with water without liquid layering phenomenon at a first temperature; the mutual solubility of the solvent and water decreases at a second temperature different from the first temperature, because the solvent and water have different densities and liquid stratification occurs. In some embodiments, the solvent is liquid at both the first temperature and the second temperature. In some embodiments, the solvent comprises one or more selected from the group consisting of alcohols, phenols, ethers, amines and ketones.

The "first temperature" and "second temperature" mentioned in this application can each be a certain specific temperature value or a certain temperature range, for example, in the range of from 20°C to 30°C.

In some embodiments, the first temperature is higher than the second temperature, for example, the first temperature is in the range of from 50°C to 85°C, preferably, in the range of from 55°C to 80°C, the second temperature is in the range of from 0°C to 45°C, preferably, in the range of from 5°C to 40°C. In this case, the solvent comprises one or more selected from the group consisting of methyl ethyl ketone, butanone, isopropanol, and isopropyl ether.

In some embodiments, the second temperature is higher than the first temperature, for example, the first temperature is in the range of from 0°C to 45°C, preferably, in the range of from 5°C to 40°C, the second temperature is in the range of from 50°C to 85°C, preferably, in the range of from 55°C to 80°C. In this case, the solvent comprises diisopropylamine or triethylamine.

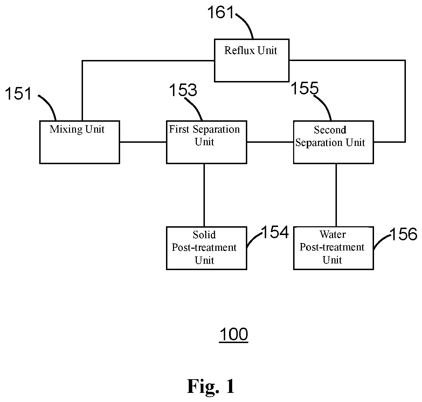

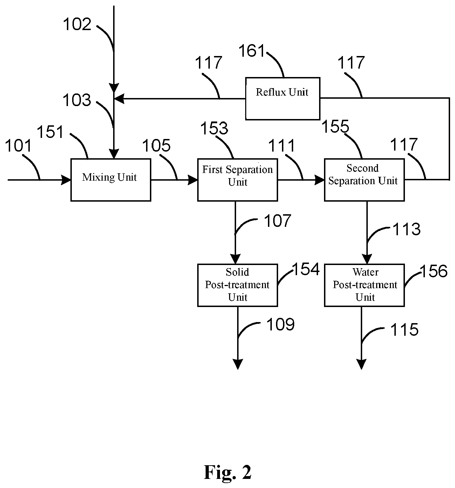

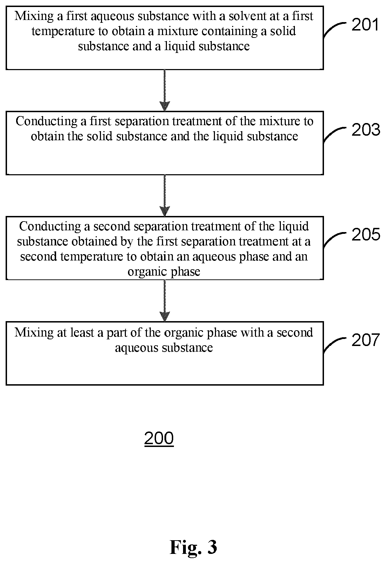

The following describes the embodiments of the present invention with reference to the drawings. Fig. 1 is a schematic structural diagram of the device 100 for treating an aqueous substance according to an embodiment of the present invention, Fig. 2 is a flowchart of treating an aqueous substance by applying the device 100 for treating an aqueous substance according to an embodiment of the present invention, Fig. 3 is a flowchart of the method 200 for treating an aqueous substance according to an embodiment of the present invention.

In some embodiments, referring to Fig. 1, the device 100 for treating an aqueous substance comprises: a mixing unit 151, comprising an aqueous substance inlet, a solvent inlet and a mixture outlet; a first separation unit 153, comprising a mixture inlet, a solid substance outlet and a liquid substance outlet, wherein the mixture inlet is connected to the mixture outlet of the mixing unit; and a second separation unit 155, comprising a liquid substance inlet, an aqueous phase outlet and an organic phase outlet, wherein the liquid substance inlet is connected to the liquid substance outlet of the first separation unit.

In some embodiments, the device 100 for treating an aqueous substance further comprises a reflux unit 161, comprising a pipe connecting the organic phase outlet of the second separation unit 155 and the solvent inlet of the mixing unit 151.

In some embodiments, the device 100 for treating an aqueous substance further comprises one or more of the following units: a solid post-treatment unit 154, comprising a solid substance inlet and a solid substance with reduced solvent outlet, wherein the solid substance inlet is connected to the solid substance outlet of the first separation unit 153; a water post-treatment unit 156, comprising an aqueous phase inlet and an aqueous phase with reduced solvent outlet, wherein the aqueous phase inlet is connected to the aqueous phase outlet of the second separation unit 155; and an organic phase post-treatment unit (not shown), comprising an organic phase inlet and a recovered solvent outlet, wherein the organic phase inlet is connected to the organic phase outlet of the second separation unit 155.

Referring to Fig. 2 and 3, the first aqueous substance 101 can be treated by the device 100 for treating an aqueous substance using the method 200 for treating an aqueous substance. During the treatment process: the mixing unit 151 is used to mix the first aqueous substance 101 with the solvent 103 to obtain a mixture 105 containing a solid substance and a liquid substance, wherein the liquid substance contains the solvent 103 and water; the first separation unit 153 is used to separate the mixture 105 to obtain a solid substance 107 and a liquid substance 111; and the second separation unit 155 is used to separate the liquid substance 111 to obtain an aqueous phase 113 and an organic phase 117, wherein the organic phase 117 contains the solvent 103.

Referring to Fig. 3, the first aqueous substance 101 and the solvent 103 are contacted in the mixing unit 151 to obtain a mixture 105 containing a solid substance and a liquid substance, wherein the liquid substance contains the solvent 103 and water extracted from the first aqueous substance 101 through the aforementioned contact. In some embodiments, the mixing unit 151 can make the first aqueous substance 101 and the solvent 103 fully contact, so that water in the first aqueous substance 101 and the solvent 103 are mutually dissolved to form a liquid mixture.

In some embodiments, the mixing unit 151 comprises a heating element or a cooling element for increasing and decreasing the temperature of the substance in the mixing unit 151, respectively. The heating element or the cooling element comprises a jacket heating equipment, a coil heating equipment or an electric heating equipment, wherein the heating medium in the jacket and coil can be one or more of water, oil and steam.

In some embodiments, the mixing unit 151 comprises a first temperature control element capable of controlling the substance in the mixing unit 151 to be at the first temperature. The first temperature control element comprises a temperature controller.

In some embodiments, the mixing unit 151 comprises a container or element capable of mixing the first aqueous substance 101 and the solvent 103, for example, a stirring element, to promote mixing between the first aqueous substance 101 and the solvent 103. The types of the stirring element comprise, but are not limited to: any one or more of propeller, paddle, turbine, frame, screw and anchor.

In some embodiments, the first aqueous substance 101 and the solvent 103 are contacted in the mixing unit 151 in a certain weight ratio. For example, the weight ratio of the solvent 103 to the first aqueous substance 101 is less than 10:1; for another example, the weight ratio of the solvent 103 to the first aqueous substance 101 is less than 8:1.

In some embodiments, the first aqueous substance 101 and the solvent 103 are each continuously injected into the mixing unit 151 at a certain speed. In some other embodiments, the first aqueous substance 101 and the solvent 103 are injected into the mixing unit 151 intermittently at a certain time interval at a certain weight ratio, for example, the first aqueous substance 101 and the solvent 103 are injected into the mixing unit 151 once every hour at a weight ratio of 5:1. Furthermore, in this intermittent injection method, each injection can be a rapid full injection within a short time interval, or an injection that lasts for a period of time, for example, continuous injection the required weight of the first aqueous substance 101 and solvent 103 within 15 minutes

Referring to Fig. 3, in step 203, the first separation unit 153 separates the solid substance 107 and the liquid substance 111 in the mixture 105. Wherein, the first separation unit 153 comprises an element capable of achieving solid-liquid separation, so as to achieve the complete or partial separation of the solid substance 107 and the liquid substance 111. Some embodiments of the first separation unit 153 comprise, but are not limited to: one or more selected from the group consisting of a gravity settling element, a cyclone separation element, a membrane separation element, a pressure filter element, a pressure reduction filter element, a centrifugal separation element, a frame filter element, and a cartridge filter element. In some embodiments, the separated liquid substance 111 may still contain a small amount of solid substance residue, and the separated solid substance 107 may still contain a small amount of liquid substance residue.

In some embodiments, the mixing unit 151 and the first separation unit 153 are two separate units, so that the two operations of mixing 201 and solid-liquid separation 203 are performed in the mixing unit 151 and the first separation unit 153, respectively. In some embodiments, the mixing unit 151 and the first separation unit 153 are integrated, which is embodied as an integrated device with both mixing and solid-liquid separation functions, so that both operations of mixing 201 and solid-liquid separation 203 are completed in this integrated equipment.

In some embodiments, the separated solid substance 107 can be directly landfilled or incinerated. In some other embodiments, the residual solvent content in the separated solid substance 107 is relatively high, and further treatment is required to remove the residual solvent. Accordingly, the device 100 for treating an aqueous substance further comprises a solid post-treatment unit 154 for removing the residual solvent in the obtained solid substance 107 by separation, thereby obtaining a solid substance 109 with a reduced solvent content. In some embodiments, heating or decompression is used to volatilize the residual solvent in the solid substance 107. The solid post-treatment unit 154 comprises, but is not limited to: any one or more of a heating element, a decompression element, a vacuum drying element, and a steam drying element. Wherein, the steam drying element uses steam to purge and wash solid substances. In other embodiments, a solvent washing method is used to remove the residual solvent in the solid substance 107. The solid post-treatment unit 154 comprises a solvent washing element, using fresh solvent 102 or separated solvent 123 to wash the separated solid substance 107 for one or more times, and the washed solid is heated or reduced pressure to volatilize the residual solvent, the washing liquid and the volatilized solvent are collected, and the solvent and water are obtained by liquid-liquid separation at the second temperature, thereby recovering the solvent used for washing. The solvent washing element can not only remove the residual solvent in the solid substance 107, but also can further reduce the water content in the solid substance 107 to further reduce.

Referring to Fig. 3, in step 205, the second separation unit 155 separates the separated liquid substance 111 to obtain an aqueous phase 113 and an organic phase 117 at a second temperature. The second separation unit 155 separates water from the liquid substance 111 by taking advantage of the low mutual solubility of the solvent and water at the second temperature. In some embodiments, the second separation unit 155 comprises a heating element or a cooling element for increasing and decreasing the temperature of the substance in the second separation unit 155, respectively. The heating element or the cooling element comprises a jacket heating equipment, a coil heating equipment or an electric heating equipment, wherein the heating medium in the jacket and coil can be one or more of water, oil and steam. In some embodiments, the second separation unit 155 comprises a second temperature control element, and the second temperature control element comprises a temperature controller, which can control the substance in the mixing unit 151 to be at the second temperature, so as to achieve liquid stratification due to the decrease of mutual solubility of water and solvent, specifically, the denser is located in the lower layer, and the less dense is located in the upper layer. For example, when triethylamine is used as the solvent, and the operating temperature of the second separation unit 155 is controlled to be in the range of from 50°C to 85°C, the liquid substance 111 is divided into two layers after standing: the upper layer is the organic phase, including triethylamine, and the lower layer is the aqueous phase. Some embodiments of the second separation unit 155 comprise, but are not limited to: one or more of a gravity separation element, a centrifugal separation element, and a cyclone separation element. In some embodiments, after separation by the second separation unit 155, the aqueous phase 113 may still contain a small amount of solvent, and the organic phase 117 may still contain a small amount of water.

In some embodiments, the device 100 for treating an aqueous substance further comprises a residual solid removal unit (not shown), which is arranged before the second separation unit 155 and is used to further remove a small amount of solid substances entrained in the liquid substance 111. The residual solid removal unit comprises, but is not limited to: any one or more of a gravity settling element, a centrifugal separation element, and a cyclone separation element. The residual solid removal unit and the second separation unit 155 can be two separate units, or can be integrated. When the residual solid removal unit is integrated with the second separation unit 155, it is embodied as an integrated device that has both the function of removing residual solids and the function of liquid-liquid separation, so that the residual solids, the aqueous phase, and the organic phase in the liquid substance 111 are separated in the integrated device.

In some embodiments, the first separation unit 153 and the second separation unit 155 are two separate units, so that the two operations of solid-liquid separation 203 and liquid-liquid separation 205 are performed in the first separation unit 153 and the second separation unit 155, respectively. In other embodiments, the first separation unit 153 and the second separation unit 155 are integrated, which is embodied as an integrated device with both solid-liquid separation and liquid-liquid separation functions, so that the two operations of solid-liquid separation 203 and liquid-liquid separation 205 are completed in this integrated device.

If the aqueous phase 113 meets the local emission standards, it can be directly discharged or transferred to a sewage treatment plant for further treatment. In some embodiments, the residual solvent content in the aqueous phase 113 is relatively high, and further treatment is required to remove the residual solvent therein. Accordingly, the device 100 for treating an aqueous substance comprises a water post-treatment unit 156 for removing residual solvent in the aqueous phase 113 to obtain water 115 with a reduced solvent content. In some embodiments, the water post-treatment unit 156 comprises a stripping element, by directly contacting the aqueous phase 113 with water vapor or hot gas, such as air or nitrogen, to diffuse the residual solvent into the gas phase, thereby water 115 with a reduced solvent content is obtained. In other embodiments, the water post-treatment unit 156 comprises an evaporation element which can be evaporated in various ways, such as changing the temperature or pressure of the aqueous phase 113. In some embodiments, the evaporation element comprises a flash evaporation element or a thermal evaporation element. In some embodiments, the water post-treatment unit 156 further comprises a liquefaction element for liquefying the evaporated residual solvent. In some embodiments, the liquefaction element comprises but is not limited to a pressurizing element or a condensing element. In some embodiments, the water post-treatment unit 156 comprises an integrated evaporation element and a liquefaction element, such as a distillation tower or a rectification tower. In some embodiments, the water post-treatment unit 156 comprises an extraction tower to remove the solvent in the aqueous phase by extraction, for example, using octane as the extractant. In the first step, the residual solvent is more soluble in the extractant. In the second step, the solvent is separated from the extractant through a rectification tower.

In some embodiments, the device 100 for treating an aqueous substance comprises a reflux unit 161 for returning at least a part of the organic phase 117 to the mixing unit 151. In the mixing unit 151, at least a part of the organic phase 117 as the solvent is mixed with the second aqueous substance, referring to Fig. 2, step 207. In some embodiments, the reflux unit 161 comprises a pipe for refluxing at least a part of the organic phase 117 to the mixing unit 151. In some embodiments, the reflux unit 161 comprises a pump for injecting at least a part of the organic phase 117 into the mixing unit 151. In some embodiments, the reflux unit 161 comprises a flow meter for monitoring the flow rate of the organic phase 117 that is refluxed. In this way, during the initial startup of the device 100 for treating an aqueous substance, the solvent required by the mixing unit 151 mainly comes from the fresh solvent 102. After the device 100 for treating an aqueous substance runs for a certain period of time, the solvent required by the mixing unit 151 will mainly come from organic phase 117, but the mixing unit 151 may still need to inject a small amount of fresh solvent 102 to supplement the solvent lost during the treatment.

In some embodiments, in addition to water and solid substances, the first aqueous substance 101 also comprises some oils or other organic substances (herein referred to as "oils"), and regardless of whether it is at the first temperature or the second temperature, the solubility of the oils in solvent is higher than its solubility in water. When the first aqueous substance 101 is mixed with the solvent 103, the oil is dissolved in the solvent 103; after passing through the first separation unit 153, it is present in the separated liquid substance 111; after passing through the second separation unit 155, it is present in the organic phase 117. In this case, the device 100 for treating an aqueous substance may further comprise an organic phase post-treatment unit (not shown) for separating the organic phase 117, removing the oil in the organic phase 117, and obtaining a recovered solvent. In some embodiments, the organic phase post-treatment unit separates the solvent from the oil through the difference in boiling point. For example, the organic phase post-treatment unit comprises an evaporation element to evaporate the solvent or oil from the organic phase 117. The evaporation element can evaporate in various ways, such as changing the temperature or pressure of the organic phase 117. In some embodiments, the evaporation element comprises a flash evaporation element or a thermal evaporation element. In some embodiments, the organic phase post-treatment unit further comprises a liquefaction element for liquefying the evaporated solvent or oil. The liquefaction element can use various methods to liquefy the evaporated solvent or oil, such as pressurizing or condensing. Wherein, when the liquefaction element is pressurized to liquefy the evaporated solvent or oil, the organic phase post-treatment unit may further comprise a cooling element to cool the solvent or oil whose temperature rises due to pressurization. In some embodiments, the organic phase post-treatment unit comprises an integrated evaporation element and liquefaction element, such as a distillation tower or a rectification tower. The recovered solvent can be used as a fresh solvent to treat other aqueous substances in the device 100, or can be stored in a recovered solvent storage unit (not shown) for use when needed, or used in other processes or equipment.

The embodiment of the present invention also relates to the method 200 for treating an aqueous substance shown in Fig. 3, and the method can be applied to the device 100 shown in Fig. 1. Specifically, the method comprises:
Step 201: mixing the first aqueous substance 101 with the solvent 103 at a first temperature to obtain a mixture 105 containing a solid substance and a liquid substance, wherein the liquid substance contains the solvent 103 and water;
Step 203: conducting a first separation treatment of the mixture 105 to obtain the solid substance 107 and the liquid substance 111; and
Step 203: conducting a second separation treatment of the liquid substance 111 obtained by the first separation treatment at a second temperature to obtain an aqueous phase 113 and an organic phase 117, and the organic phase contains the solvent 103.

Specifically, in step 201, the first aqueous substance 101 is in contact with the solvent 103, and the temperature is maintained at the first temperature to obtain a mixture 105 of a solid substance and a liquid substance that is easy to perform solid-liquid separation; in step 203, the mixture 105 is separated to obtain a solid substance 107 and a liquid substance 111; in step 205, the temperature of the liquid substance 111 is maintained at the second temperature, because the mutual solubility of the solvent 103 and water is low at the second temperature , the liquid substance 111 forms two liquid phases: the organic phase 117 containing the solvent 103 and the aqueous phase 113, both of which are separated by the density difference between the organic phase 117 and the aqueous phase 113. Through the above three steps, at least a part of the water is separated from the first aqueous substance 101 to obtain a solid substance 107. Compared with the treated first aqueous substance 101, the solid substance 107 has a lower water content and a smaller volume, thereby achieving reduction.

In some embodiments, the method 200 for treating an aqueous substance further comprises step 207: mixing at least a part of the organic phase 117 as the solvent with a second aqueous substance. Reusing the organic phase 117 for the treatment of other aqueous substances can save the amount of solvent and greatly save costs.

In some embodiments, the method 200 for treating an aqueous substance further comprises: removing the residual solvent in the solid substance 107 obtained in step 203 to obtain a solid substance 109 with a reduced solvent content. The specific method may be to volatilize the residual solvent in the solid substance 107 by heating or reducing pressure. In some embodiments, the solid substance 109 with a reduced solvent content can meet the requirements for solid landfill or incineration.

In some embodiments, the method 200 for treating an aqueous substance further comprises: removing residual solvent in the aqueous phase 113 obtained in step 205 to obtain water 115 with a reduced solvent content. The specific method can be steam stripping or evaporation, wherein evaporation comprises the azeotropic method. In some embodiments, the water 115 with reduced solvent content may be directly discharged or transported to a sewage treatment plant for treatment.

In some embodiments, the method 200 for treating an aqueous substance further comprises: separating the organic phase 117 to obtain a recovered solvent. The specific method can be distillation or rectification. In some embodiments, the recovered solvent can be used as a fresh solvent 102 for treating other aqueous substances.

In the method 200 for treating an aqueous substance, at least a part of the water in the aqueous substance is separated by using a solvent whose mutual solubility with water varies with temperature. Specifically, after the solvent and the substance to be treated are mixed at the first temperature, the solid substance is separated from the mixture of the aqueous substance and the solvent by solid-liquid separation; secondly, the water and the solvent are separated due to different densities at the second temperature, and the separated aqueous phase and organic phase are obtained through liquid-liquid separation. In the process of treatment, since the separation of water does not undergo a phase transition, the method and its corresponding device have low energy consumption and are economical and practical.

### Experimental Example

Some experimental examples of the present invention are provided below. The following experimental examples can provide references for people with general skills in the field to implement the present invention. These examples do not limit the scope of the claims.

### Example 1

A small device with a sample treating capacity of 100 g per batch was used to treat the biochemical sludge with methyl ethyl ketone as the solvent. The water content, organic substance content and ash content of the biochemical sludge were shown in Table 1.

In a mixer with stirring function, under normal pressure and 80°C, 100 g of biochemical sludge and 200 g of methyl ethyl ketone were added and stirred for 5 minutes to mix. Then, the mixture in the mixer was drained into a filter with a filter cloth pore size of 5 microns under the pressure of 4 bar with compressed air or compressed nitrogen for filtration. The separated solids were collected on the filter cloth and the filtered liquid substances containing methyl ethyl ketone, water and organic substances were introduced into the liquid-liquid separator. In the liquid-liquid separator, the temperature of the mixture of methyl ethyl ketone, water and organic substances was adjusted to 65°C and stabilized for about 10 minutes under the normal pressure, so that the mixture was divided into upper and lower layers: the upper layer was methyl ethyl ketone, and the lower layer was the aqueous phase. The lower aqueous phase was introduced into the stripper for evaporation, the residual methyl ethyl ketone in the aqueous phase was evaporated, condensed and liquefied, and returned to the liquid-liquid separator, and the remaining water was collected as the separated water. The components of the separated solid and water were shown in Table 1.

The biochemical sludge after solvent treatment was reduced by 81.1%. The separated solid was loose, with obvious particle and the water content of about 12.7%.

**Table 1**

| | Biochemical sludge | Separated solid | Separated water |
|---|---|---|---|
| Water content (%) | 80.2 | 12.7% | 96.2% |
| Organic substance content (%) | 10.7 | 41.2% | 3.6% |
| Ash content (%) | 9.1% | 46.0% | 0.2% |
| Reduction (%) | / | 81.1% | / |

### Example 2

A small device with a sample treating capacity of 100 g per batch was used to treat the municipal sludge with methyl ethyl ketone as the solvent. The water content, organic substance content and ash content of the municipal sludge were shown in Table 2.

In a mixer with stirring function, under normal pressure and 80°C, 40 g of municipal sludge and 80 g of methyl ethyl ketone were added and stirred for 5 minutes to mix. Then, the mixed mixture containing liquid and solid substances in the mixer was drained into a filter with a filter cloth pore size of 5 microns under the pressure of 4 bar with compressed air or compressed nitrogen for filtration. The separated solids were collected on the filter cloth and the filtered liquid substances containing methyl ethyl ketone, water and organic substances were introduced into the liquid-liquid separator. In the liquid-liquid separator, the temperature of the mixture of methyl ethyl ketone, water and organic substances was adjusted to 40°C and stabilized for about 10 minutes under the normal pressure, so that the mixture was divided into upper and lower layers: the upper layer was methyl ethyl ketone, and the lower layer was the aqueous phase. The lower aqueous phase was introduced into the stripper for evaporation, the residual methyl ethyl ketone in the aqueous phase was evaporated, condensed and liquefied, and returned to the liquid-liquid separator, and the remaining water was collected as the separated water. The components of the separated solid and water were shown in Table 2.

The municipal sludge after solvent treatment was reduced by 97.6%. The separated solid was loose, with obvious particle and the water content of about 16.5%.

**Table 2**

| | Municipal sludge | Separated solid | Separated water |
|---|---|---|---|
| Water content (%) | 98.00% | 0.50% | 1.50% |
| Organic substance content (%) | 16.45% | 21.05% | 62.50% |
| Ash content (%) | 99.97% | 0.01% | 0.02% |
| Reduction (%) | / | 97.6% | / |

### Example 3

A small device with a sample treating capacity of 100 g per batch was used to treat the scum oil sludge with triethylamine as the solvent. The water content, oil content and ash content of the scum oil sludge were shown in Table 3. Wherein, ash refers to the inorganic substances other than water in the sample.

In a mixer with stirring function, under normal pressure and 30°C, 100 g of scum oil sludge and 200 g of triethylamine were added stirred for 5 minutes to mix. Then, the mixture in the mixer was drained into a filter with a filter cloth pore size of 5 microns under the pressure of 5 bar with compressed air or compressed nitrogen for filtration. The separated solids were collected on the filter cloth and the filtered liquid substances containing triethylamine, water and oil were introduced into the liquid-liquid separator. In the liquid-liquid separator, the temperature of the mixture of triethylamine, water and oil was rose to 80°C and stabilized for about 10 minutes under the normal pressure, so that the mixture was divided into upper and lower layers: the upper layer was the organic phase containing triethylamine and oil, and the lower layer was the aqueous phase. The lower aqueous phase was introduced into the stripper for evaporation, the residual triethylamine in the aqueous phase formed an azeotrope with water and was evaporated. The azeotrope was liquefied and returned to the liquid-liquid separator, and the remaining water was collected as the separated water. The components of the separated solid and water were shown in Table 3.

The scum oil sludge after solvent treatment was reduced by 98.0%. The separated solid was loose, with obvious particles, the water content of less than 20%, the oil content of about 50%, the ash content of about 33%, and its calorific value was about 16.72 MJ/kg (about 4000 kcal/kg), which could supplement a small amount of fuel for further incineration. The separated water had very low oil content and ash content, with a turbidity of about 669 NTU, which could be transported to the wastewater treatment system for further treatment.

**Table 3**

| | Scum oil sludge | Separated solid | Separated water |
|---|---|---|---|
| Water content (%) | 97.58 | 17.05 | 99.71 |
| Oil content (%) | 1.60 | 49.20 | 0.16 |
| Ash content (%) | 0.82 | 33.75 | 0.13 |
| Reduction (%) | / | 98.0 | / |

### Example 4

Firstly, the scum oil sludge was pretreated and dehydrated. The pre-dehydration was dehydrated by pressure filtration with a filter cloth pore size of 5 microns under 4 standard atmospheric pressures. The filtered aqueous phase was clear and transparent, and no oil and ash were detected. The scum oil sludge after pre-dehydration was relatively dry, and the reduction was over 90%. The water content, oil content and ash content of the pre-dehydrated scum oil sludge were shown in Table 4.

A small device with a sample treating capacity of 100 g per batch was used to treat the pre-dehydrated scum oil sludge with triethylamine as the solvent.

In a mixer with stirring function, under normal pressure and 30°C, 100 g of pre-dehydrated scum oil sludge and 200 g of triethylamine were added stirred for 5 minutes to mix. Then, the mixture in the mixer was drained into a filter with a filter cloth pore size of 5 microns under the pressure of 5 bar with compressed air or compressed nitrogen for filtration, and the filtration was completed in about 5 minutes. The separated solids were collected on the filter cloth and the filtered liquid substances containing triethylamine, water and oil were introduced into the liquid-liquid separator. In the liquid-liquid separator, the temperature of the mixture of triethylamine, water and oil was rose to 80°C and stabilized for about 10 minutes under the normal pressure, so that the mixture was divided into upper and lower layers: the upper layer was the organic phase containing triethylamine and oil, and the lower layer was the aqueous phase. The lower aqueous phase was introduced into the stripper for evaporation, the residual triethylamine in the aqueous phase formed an azeotrope with water and was evaporated. The azeotrope was liquefied and returned to the liquid-liquid separator, and the remaining water was collected as the separated water. The components of the separated solid and water were shown in Table 4.

The scum oil sludge after solvent treatment was further reduced by 85.3%. In this example, two steps of pre-dehydration and solvent separation were used to treat aqueous substances with high water content, which could greatly reduce the amount of solvents and save costs.

**Table 4**

| | Scum oil sludge | Pre-dehydrated scum oil sludge | Separated solid | Separated water |
|---|---|---|---|---|
| Water content (%) | 97.8 | 78.9 | 32.6 | 99.4 |
| Oil content (%) | 1.7 | 16.4 | 34.6 | 0.6 |
| Ash content (%) | 0.5 | 4.6 | 32.8 | None Detected |
| Reduction (%) | / | >90 | 85.3 | / |

### Example 5

A small device with a sample treating capacity of 100 g per batch was used to treat the oil sludge of tank bottom with triethylamine as the solvent. The water content, oil content and ash content of the oil sludge of tank bottom were shown in Table 5.

In a mixer with stirring function, under normal In a mixer with stirring function, under normal pressure and 30°C, 100 g of oil sludge of tank bottom and 500 g of triethylamine were added stirred for 5 minutes to mix. Then, the mixture in the mixer was drained into a filter with a filter cloth pore size of 50 microns under the pressure of 5 bar with compressed air or compressed nitrogen for filtration. The separated solids were collected on the filter cloth and the filtered liquid substances containing triethylamine, water and oil were introduced into the liquid-liquid separator. In the liquid-liquid separator, the temperature of the mixture of triethylamine, water and oil was rose to 80°C and stabilized for about 10 minutes under the normal pressure, so that the mixture was divided into upper and lower layers: the upper layer was the organic phase containing triethylamine and oil, and the lower layer was the aqueous phase. The lower aqueous phase was introduced into the stripper for evaporation, the residual triethylamine in the aqueous phase formed an azeotrope with water and was evaporated. The azeotrope was liquefied and returned to the liquid-liquid separator, and the remaining water was collected as the separated water. The components of the separated solid and water were shown in Table 5.

The oil sludge of tank bottom after solvent treatment was reduced by 94.9%. The separated solid was loose, with obvious particles, the water content of less than 10%, the oil content of about 75%, the ash content of about 17%, and its calorific value was about 29.79 MJ/kg (about 7127 kcal/kg), which was equivalent to the calorific value level of standard coal and could be directly used as fuel for incineration. The separated water had very low oil content and ash content, with a turbidity of about 447 NTU, which could be transported to the wastewater treatment system for further treatment.

**Table 5**

| | Oil sludge of tank bottom | Separated solid | Separated water |
|---|---|---|---|
| Water content (%) | 69.2 | 7.65 | 99.69 |
| Oil content (%) | 29.9 | 75.20 | 0.30 |
| Ash content (%) | 0.9 | 17.15 | 0.01 |
| Reduction (%) | / | 94.9 | / |

### Example 6

A small device with a sample treating capacity of 100 g per batch was used to treat drilling cuttings with isopropanol as the solvent. The water content, oil content and ash content of drilling cuttings were shown in Table 6.

In a mixer with stirring function, under normal pressure and 80°C, 100 g of drilling cuttings and 200 g of isopropanol were added and stirred for 5 minutes to mix. Then, the mixture in the mixer was drained into a filter with a filter cloth pore size of 5 microns under the pressure of 4 bar with compressed air or compressed nitrogen for filtration. The separated solids were collected on the filter cloth and the filtered liquid substances containing isopropanol, water and oil were introduced into the liquid-liquid separator. In the liquid-liquid separator, the temperature of the mixture of isopropanol, water and oil was adjusted to 40°C and stabilized for about 10 minutes under the normal pressure, so that the mixture was divided into upper and lower layers: the upper layer was the organic phase containing isopropanol and oil, and the lower layer was the aqueous phase. The lower aqueous phase was introduced into the stripper for evaporation, the residual isopropanol in the aqueous phase formed an azeotrope with water and was evaporated. The azeotrope was liquefied and returned to the liquid-liquid separator, and the remaining water was collected as the separated water. The components of the separated solid and water were shown in Table 6.

The drilling cuttings after solvent treatment were reduced by 15%. The separated solid was loose, with obvious particle and the water content of only 1%.

**Table 6**

| | Drilling cuttings | Separated solid | Separated water |
|---|---|---|---|
| Water content (%) | 6.00 | 1.08 | 99.88 |
| Oil content (%) | 14.00 | 4.81 | 0.10 |
| Ash content (%) | 80.00 | 94.11 | 0.02 |
| Reduction (%) | / | 15 | / |

### Example 7

A small device with a sample treating capacity of 100 g per batch was used to treat the cutting fluid waste with diisopropylamine as the solvent. The water content, oil content and ash content of the cutting fluid waste were shown in Table 7.

In a mixer with stirring function, under normal pressure and 40°C, 100 g of the cutting fluid waste and 200 g of diisopropylamine were added and stirred for 5 minutes to mix. Then, the mixture in the mixer was drained into a filter with a filter cloth pore size of 5 microns under the pressure of 5 bar with compressed air or compressed nitrogen for filtration. The separated solids were collected on the filter cloth and the filtered liquid substances containing diisopropylamine, water and oil were introduced into the liquid-liquid separator. In the liquid-liquid separator, the temperature of the mixture of diisopropylamine, water and oil was rose to 80°C and stabilized for about 10 minutes under the normal pressure, so that the mixture was divided into upper and lower layers: the upper layer was the organic phase containing diisopropylamine and oil, and the lower layer was the aqueous phase. The lower aqueous phase was introduced into the stripper for evaporation, the residual diisopropylamine in the aqueous phase formed an azeotrope with water and was evaporated. The azeotrope was liquefied and returned to the liquid-liquid separator, and the remaining water was collected as the separated water. The components of the separated solid and water were shown in Table 7.

The cutting fluid waste after solvent treatment was reduced by 99.2%.

**Table 7**

| | Cutting fluid waste | Separated solid | Separated water |
|---|---|---|---|
| Water content (%) | 91.22 | 13.58 | 97.11 |
| Oil content (%) | 8.62 | 69.70 | 2.88 |
| Ash content (%) | 0.16 | 16.72 | 0.01 |
| Reduction (%) | / | 99.2 | / |

### Example 8

A small device with a sample treating capacity of 100 g per batch was used to treat oil sands with diisopropylamine as the solvent. The water content, oil content and ash content of oil sands were shown in Table 8.

In a mixer with stirring function, under normal pressure and 40°C, 100 g of oil sands and 150 g of diisopropylamine were added and stirred for 5 minutes to mix. Then, the mixture in the mixer was drained into a filter with a filter cloth pore size of 5 microns under the pressure of 4 bar with compressed air or compressed nitrogen for filtration. The separated solids were collected on the filter cloth and the filtered liquid substances containing diisopropylamine, water and oil were introduced into the liquid-liquid separator. In the liquid-liquid separator, the temperature of the mixture of diisopropylamine, water and oil was rose to 80°C and stabilized for about 10 minutes under the normal pressure, so that the mixture was divided into upper and lower layers: the upper layer was the organic phase containing diisopropylamine and oil, and the lower layer was the aqueous phase. The lower aqueous phase was introduced into the stripper for evaporation, the residual diisopropylamine in the aqueous phase formed an azeotrope with water and was evaporated. The azeotrope was liquefied and returned to the liquid-liquid separator, and the remaining water was collected as the separated water. The components of the separated solid were shown in Table 8.

**Table 8**

| | Oil sands | Separated solid |
|---|---|---|
| Water content (%) | 4.6% | 0.1% |
| Oil content (%) | 10.8% | 0.5% |
| Ash content (%) | 84.6% | 99.4% |

### Example 9

A small device with a sample treating capacity of 100 g per batch was used to treat the oilfield produced water with triethylamine as the solvent. The water content, oil content and ash content of the oilfield produced water were shown in Table 9.

In a mixer with stirring function, under normal pressure and 30°C, 100 g of the oilfield produced water and 150 g of triethylamine were added stirred for 5 minutes to mix. Then, the mixture in the mixer was drained into a filter with a filter cloth pore size of 5 microns under the pressure of 4 bar with compressed air or compressed nitrogen for filtration. The separated solids were collected on the filter cloth and the filtered liquid substances containing triethylamine, water and oil were introduced into the liquid-liquid separator. In the liquid-liquid separator, the temperature of the mixture of triethylamine, water and oil was rose to 80°C and stabilized for about 10 minutes under the normal pressure, so that the mixture was divided into upper and lower layers: the upper layer was the organic phase containing triethylamine and oil, and the lower layer was the aqueous phase. The lower aqueous phase was introduced into the stripper for evaporation, the residual triethylamine in the aqueous phase formed an azeotrope with water and was evaporated. The azeotrope was liquefied and returned to the liquid-liquid separator, and the remaining water was collected as the separated water. The components of the separated solid and water were shown in Table 9.

The oilfield produced water after solvent treatment was reduced by 74%.

**Table 9**

| | Oilfield produced water | Separated solid | Separated water |
|---|---|---|---|
| Water content (%) | 70.0 | 3.2 | 99.4 |
| Oil content (%) | 10.2 | 20.6 | 0.55 |
| Ash content (%) | 19.8 | 76.2 | 0.05 |
| Reduction (%) | / | 74 | / |

### Example 10

A small device with a sample treating capacity of 100 g per batch was used to treat the oilfield produced water with butanone as the solvent. The water content, oil content and ash content of the oilfield produced water were shown in Table 10.

In a mixer with stirring function, under normal pressure and 80°C, 40 g of the oilfield produced water and 80 g of butanone were added stirred for 5 minutes to mix. Then, the mixture in the mixer was drained into a filter with a filter cloth pore size of 5 microns under the pressure of 4 bar with compressed nitrogen for filtration. The separated solids were collected on the filter cloth and the filtered liquid substances containing butanone, water and oil were introduced into the liquid-liquid separator. In the liquid-liquid separator, the temperature of the mixture of butanone, water and oil was dropped to 40°C and stabilized for about 10 minutes under the normal pressure, so that the mixture was divided into upper and lower layers: the upper layer was the organic phase containing butanone and oil, and the lower layer was the aqueous phase. The lower aqueous phase was introduced into the stripper for evaporation, the residual butanone in the aqueous phase formed an azeotrope with water and was evaporated. The azeotrope was liquefied and returned to the liquid-liquid separator, and the remaining water was collected as the separated water. The components of the separated solid and water were shown in Table 10.

The oilfield produced water after solvent treatment was reduced by 70.7%.

**Table 10**

| | Oilfield produced water | Separated solid | Separated water |
|---|---|---|---|
| Water content (%) | 70.0 | 12.54 | 99.58 |
| Oil content (%) | 10.2 | 20.08 | 0.55 |
| Ash content (%) | 19.8 | 67.38 | 0.05 |
| Reduction (%) | / | 70.7 | / |

### Example 11

A small device with a sample treating capacity of 100 g per batch was used to treat the oilfield produced water with isopropanol and isopropyl ether as the solvent. The water content, oil content and ash content of the oilfield produced water were shown in Table 11.

In a mixer with stirring function, under normal pressure and 70°C, 40 g of the oilfield produced water, 40 g of isopropanol and 40 g of isopropyl ether were added stirred for 5 minutes to mix. Then, the mixture in the mixer was drained into a filter with a filter cloth pore size of 5 microns under the pressure of 4 bar with compressed nitrogen for filtration. The separated solids were collected on the filter cloth and the filtered liquid substances containing isopropanol, isopropyl ether, water and oil were introduced into the liquid-liquid separator. In the liquid-liquid separator, the temperature of the mixture of isopropanol, isopropyl ether, water and oil was dropped to 40°C and stabilized for about 10 minutes under the normal pressure, so that the mixture was divided into upper and lower layers: the upper layer was the organic phase containing isopropanol, isopropyl ether and oil, and the lower layer was the aqueous phase. The lower aqueous phase was introduced into the stripper for evaporation, the residual isopropanol, isopropyl ether in the aqueous phase formed an azeotrope with water and was evaporated. The azeotrope was liquefied and returned to the liquid-liquid separator, and the remaining water was collected as the separated water. The components of the separated solid and water were shown in Table 11.

The oilfield produced water after solvent treatment was reduced by 73.5%.

**Table 11**

| | Oilfield produced water | Separated solid | Separated water |
|---|---|---|---|
| Water content (%) | 70.0 | 7.66 | 99.35 |
| Oil content (%) | 10.2 | 17.74 | 0.58 |
| Ash content (%) | 19.8 | 74.60 | 0.07 |
| Reduction (%) | / | 73.5 | / |

The above devices and methods are only preferred embodiments of the present invention. It should be pointed out that for those of ordinary skill in the art, without departing from the principle of the present invention, several improvements and modifications can be made, and these improvements and modifications should also be regarded as the protection scope of the present invention.

## Claims

1. A method for treating an aqueous substance, comprising:
mixing a first aqueous substance with a solvent at a first temperature to obtain a mixture containing a solid substance and a liquid substance, the liquid substance contains the solvent and water;
conducting a first separation treatment of the mixture to obtain the solid substance and the liquid substance; and
conducting a second separation treatment of the liquid substance obtained by the first separation treatment at a second temperature to obtain an aqueous phase and an organic phase, the organic phase contains the solvent,
wherein, the mutual solubility of the solvent and water at the first temperature is higher than that of the solvent and water at the second temperature.

2. The method according to claim 1, wherein the solvent comprises one or more selected from the group consisting of alcohols, phenols, ethers, amines and ketones.

3. The method according to claim 1, wherein the mutual solubility of the solvent and water at the first temperature is higher than the mutual solubility of the solvent and water at the second temperature, the first temperature is in a range of from 50°C to 85°C, the second temperature is in a range of from 0°C to 45°C.

4. The method according to claim 3, wherein the solvent comprises one or more selected from the group consisting of methyl ethyl ketone, butanone, isopropanol, and isopropyl ether.

5. The method according to claim 1, wherein the mutual solubility of the solvent and water at the first temperature is higher than the mutual solubility of the solvent and water at the second temperature, the first temperature is in a range of from 0°C to 45°C, the second temperature is in a range of from 50°C to 85°C.

6. The method according to claim 5, wherein the solvent comprises diisopropylamine or triethylamine.

7. The method according to claim 1, wherein the weight ratio of the solvent to the first aqueous substance is less than 10:1.

8. The method according to claim 1, wherein the water content of the solid substance obtained by the first separation treatment is no more than 60%.

9. The method according to claim 1, further comprising mixing at least a part of the organic phase with a second aqueous substance.

10. The method according to claim 1, wherein the aqueous substance comprises one or more selected from the group consisting of municipal sludge, river bed sludge, industrial sludge, water treatment plant sludge, an animal and plant body, and a microorganism.

11. A device for treating an aqueous substance, used for carrying out the method as defined in any of claims 1-10, comprising:
a mixing unit, comprising an aqueous substance inlet, a solvent inlet and a mixture outlet;
a first separation unit, comprising a mixture inlet, a solid substance outlet and a liquid substance outlet, wherein the mixture inlet is connected to the mixture outlet of the mixing unit; and
a second separation unit, comprising a liquid substance inlet, an aqueous phase outlet and an organic phase outlet, wherein the liquid substance inlet is connected to the liquid substance outlet of the first separation unit.

12. The device according to claim 11, wherein the mixing unit further comprises a first temperature control element.

13. The device according to claim 11, wherein the mixing unit further comprises a stirring element.

14. The device according to claim 11, wherein the first separation unit further comprises one or more selected from the group consisting of a gravity settling element, a cyclone separation element, a membrane separation element, a pressure filter element, a pressure reduction filter element, a centrifugal separation element, a frame filter element, and a cartridge filter element.

15. The device according to claim 11, wherein the second separation unit further comprises a second temperature control element.

16. The device according to claim 11, wherein the second separation unit further comprises a liquid-liquid separation element.

17. The device according to claim 11, further comprising:
a reflux unit, comprising a pipe connecting the organic phase outlet of the second separation unit and the solvent inlet of the mixing unit.

18. The device according to claim 11, further comprising one or more of the following units:
a solid post-treatment unit, comprising a solid substance inlet and a solid substance with reduced solvent outlet, the solid substance inlet is connected to the solid substance outlet of the first separation unit;
a water post-treatment unit, comprising an aqueous phase inlet and an aqueous phase with reduced solvent outlet, the aqueous phase inlet is connected to the aqueous phase outlet of the second separation unit; and
an organic phase post-treatment unit, comprising an organic phase inlet and a recovered solvent outlet, the organic phase inlet is connected to the organic phase outlet of the second separation unit.
